# FASCICULE DE BREVET EUROPEEN

(11) **EP 3 377 350 B1**
(45) Date de publication et mention de la délivrance du brevet: **16.10.2019**
(21) Numéro de dépôt: 16805304.9
(22) Date de dépôt: 09.11.2016
(51) Int. Cl.: B60K 1/04

(54) **DISPOSITIF DE VERROUILLAGE D'UN MODULE DE STOCKAGE D'ENERGIE ELECTRIQUE RECHARGEABLE ET VEHICULE ELECTRIQUE MUNI D'UN TEL DISPOSITIF**
VORRICHTUNG ZUM VERRIEGELN EINES WIEDERAUFLADBAREN ELEKTRISCHEN ENERGIESPEICHERMODULS UND ELEKTRISCHES FAHRZEUG MIT EINER DERARTIGEN VORRICHTUNG
DEVICE FOR LOCKING A RECHARGEABLE ELECTRICAL ENERGY STORAGE MODULE, AND ELECTRIC VEHICLE PROVIDED WITH SUCH A DEVICE

(30) Priorité: 16.11.2015 FR 1560983
(43) Date de publication de la demande: 26.09.2018
(73) Titulaire: Bluebus, 29500 Ergue Gaberic (FR)
(72) Inventeur: BESSON, Patrice, 69970 Marennes (FR)
(74) Mandataire: IPAZ
(86) Numéro de dépôt international: PCT/EP2016/077113
(87) Numéro de publication internationale: WO 2017/084937

(56) Documents cités:
- WO-A1-93/12945
- DE-A1-102012 208 499
- DE-A1-102012 218 809
- FR-A1- 2 962 943
- FR-A3- 2 943 970
- JP-A- H11 115 504

## Description

La présente invention concerne un dispositif de verrouillage d'un module de stockage d'énergie électrique rechargeable dans un véhicule électrique. Elle concerne également un véhicule électrique, en particulier de transport en commun terrestre de type bus ou tram-bus, comprenant un tel dispositif de verrouillage.

Le domaine de l'invention est le domaine des véhicules électriques, en particulier des véhicules électriques terrestres de transport en commun de type bus ou tram-bus, munis de modules de stockage d'énergie électrique rechargeables pour alimenter au moins un moteur électrique dudit véhicule électrique.

### Etat de la technique

Les véhicules électriques, en particulier de transport en commun terrestre sur route, comportent un ou plusieurs moteurs électriques et un ou plusieurs modules de stockage d'énergie électrique rechargeables pour l'alimenter. Les modules de stockage d'énergie électrique sont disposés et verrouillés dans le véhicule pour assurer leur stabilité lorsque le véhicule est en mouvement.

Le verrouillage des modules de stockage d'énergie est un point essentiel car ces modules sont généralement encombrants et lourds. Par conséquent, tout déplacement d'un module de stockage peut avoir des conséquences graves pour le véhicule, pour les utilisateurs et pour l'environnement du véhicule.

FR 2943970 décrit un dispositif de verrouillage selon le préambule de la revendication 1.

Actuellement, le verrouillage d'un module de stockage dans un véhicule électrique est réalisé par une multitude de dispositifs de fixation, tels que des vis ou des boulons, attachant le module de stockage sur une ossature du véhicule en de multiples points : un tel mode de fixation est long, chronophage et peu ergonomique compte tenu de l'espace disponible. Ces inconvénients se retrouvent à chaque fois que le module de stockage doit être déplacé pour son remplacement ou une maintenance. Par ailleurs, les vis et les boulons peuvent se gripper dans le temps, ce qui amplifie ces inconvénients.

Un but de la présente invention est de remédier à ces inconvénients.

Un autre but de l'invention est de proposer un dispositif de verrouillage d'un module de stockage d'énergie électrique dans un véhicule, permettant un verrouillage et un déverrouillage plus simple, moins chronophage et plus ergonomique, du module de stockage d'énergie électrique, lors d'une opération de remplacement ou de maintenance dudit module.

### Exposé de l'invention

L'invention permet d'atteindre au moins l'un de ces buts par un dispositif de verrouillage selon la revendication 1.

Ainsi, dans une position ouverte, le crochet permet le déplacement du module de stockage et, dans une position fermée, le crochet vient verrouiller le module de stockage contre une paroi prévue dans le véhicule électrique, par serrage. Le passage du crochet de la position ouverte à la position fermée est réalisé de manière simple, rapide, intuitive et ergonomique, par une combinaison d'un mouvement de rotation puis de translation.

De même, le déverrouillage du module de stockage est identiquement simple, rapide, intuitif et ergonomique, ce qui facilite un déplacement du module de stockage pour son remplacement ou sa maintenance.

De plus, le verrouillage est réalisé par serrage, ce qui est plus robuste contre l'usure dans le temps comparé à une fixation par de multiples vis ou boulons qui pourraient se gripper dans le temps.

Dans la présente demande, par « module de stockage » on entend un ensemble comprenant un ou plusieurs éléments de stockage d'énergie électriques de type batterie ou supercapacité, agencé(s) dans une enveloppe externe rigide. Le module de stockage peut en outre être muni d'un habillage pouvant comprendre :
- une plaque de support sur laquelle est fixée, solidaire, l'enveloppe externe, et/ou
- une ou des pièces de support latérales, disposées sur au moins un côté, telles que des barres, des tubes creux ou des cornières.

Dans un mode de réalisation avantageux, le dispositif selon l'invention peut comprendre une vis, dite de serrage, agencée dans un taraudage prévu dans le crochet et venant en butée contre le corps, la translation du crochet étant réalisée par rotation de ladite vis de serrage.

Ainsi, lorsque la vis de serrage est serrée, respectivement desserrée, le crochet subit une translation venant plaquer le module de stockage contre la paroi du véhicule, car la vis de serrage est en butée contre le corps, et *vice versa.*

En outre, le crochet peut avantageusement comporter une butée, faisant saillie dudit crochet, en particulier au niveau d'une extrémité de serrage dudit crochet, et prévue pour venir se loger dans un évidement prévu à cet effet, lorsque ledit crochet est en position fermée.

Une telle butée permet d'une part un positionnement correct du crochet lors du serrage et d'autre part un meilleur verrouillage du module de stockage.

Suivant un exemple de réalisation non limitatif dans lequel le dispositif de verrouillage est agencé sur une paroi prévue dans le véhicule, l'évidement dans lequel la butée vient se loger est prévu dans le module de stockage, et en particulier dans un tube latéral solidaire du module de stockage et faisant partie de l'habillage du module de stockage.

L'évidement peut présenter une section conique de sorte à faciliter le positionnement de la butée dans ledit évidement.

De plus, la rotation du crochet peut être assurée par un axe traversant le crochet, au niveau d'une des extrémités dudit crochet, et disposé rotatif dans une ouverture aménagée dans le corps.

Par ailleurs, selon l'invention, l'axe de rotation du crochet est disposé dans au moins une ouverture oblongue prévue dans le corps, dans laquelle il est libre en translation.

En particulier, le crochet peut être muni d'un axe traversant ledit crochet au niveau d'une des extrémités dudit crochet, et disposé rotatif dans une, en particulier deux, ouverture(s) oblongue(s) aménagée(s) dans le corps, dans laquelle (lesquelles) ledit axe de rotation est également libre en translation.

Une telle architecture permet à la fois la rotation et la translation du crochet, par rapport au corps, de manière simple.

Suivant un exemple de réalisation préféré, mais nullement limitatif, le crochet peut présenter une forme générale en « C », dont l'une des extrémités est libre et réalise le serrage du module de stockage et l'autre des extrémités est reliée au corps et comporte :
- un axe traversant ledit crochet, et
- un taraudage accueillant une vis de serrage qui, lorsqu'elle est mise en rotation, vient en butée contre ledit corps et applique une translation audit crochet.

En plus, ou alternativement, suivant un exemple de réalisation préféré, mais nullement limitatif, le corps peut présenter une forme générale en « U », dont chaque branche comporte une ouverture oblongue, recevant un axe libre en rotation et en translation par rapport audit corps, pour assurer à la fois la rotation et la translation du crochet par rapport au corps.

Dans ce mode de réalisation, l'extrémité du crochet fixée au corps est en rotation et en translation entre les branches du corps en forme de « U » et la vis de serrage du crochet est facilement accessible depuis la partie ouverte de la forme « U » et vient en butée contre la base de la forme en « U » du côté intérieur de la forme en « U ».

Suivant un autre aspect de la même invention, il est proposé un module de stockage d'énergie électrique rechargeable muni d'un dispositif de verrouillage selon l'invention.

Le corps du dispositif de verrouillage peut avantageusement être disposé solidaire du module de stockage en partie arrière du module de stockage.

Le dispositif de verrouillage peut être fixé solidaire :
- de l'enveloppe du module de stockage, ou
- d'une plaque de support du module de stockage, lorsque le module de stockage comporte une telle plaque, ou encore
- d'une pièce de support latérale du module de stockage, lorsque le module de stockage comporte une telle pièce.

Dans ce cas, le dispositif de verrouillage est fixé immobile au module de stockage au travers du corps du dispositif de verrouillage, par exemple par soudage ou par boulonnage ou encore par vissage.

De plus, le crochet du dispositif de stockage vient au contact d'une paroi solidaire du côté du véhicule, telle qu'une cornière d'un rack prévu pour accueillir ledit module de stockage.

Suivant encore un autre aspect de la même invention, il est proposé un véhicule électrique comprenant :
- au moins un module de stockage d'énergie électrique rechargeable, disposé dans un emplacement, dit rack, aménagé dans une paroi latérale, et en particulier dans une paroi arrière, dudit véhicule, en particulier suivant une direction perpendiculaire à ladite paroi, et
- au moins un dispositif de verrouillage, dit arrière, selon l'invention, en partie arrière dudit rack.

Préférentiellement, au moins un, en particulier chaque rack, peut comporter un dispositif de verrouillage arrière sur chacun des côtés latéraux dudit rack.

Suivant un exemple de réalisation nullement limitatif, au moins un rack peut être formé par deux cornières latérales, en regard l'une vers l'autre, et prévues pour supporter un module de stockage.

Dans ce cas, au moins une, en particulier chaque cornière, peut comporter un dispositif de verrouillage fixé solidaire à ladite cornière, par exemple en partie avant de la cornière. Le dispositif de verrouillage est fixé à la cornière par le corps dudit dispositif de verrouillage, par exemple par soudage ou par boulonnage ou encore par vissage.

Chaque cornière d'un rack peut comporter un revêtement présentant un plus faible coefficient de frottement, du côté de sa surface venant en contact avec le module de stockage, pour faciliter l'introduction du module de stockage dans le rack.

Le véhicule selon l'invention peut en outre comprendre, pour au moins un côté d'au moins un rack, au moins un dispositif de verrouillage, dit avant, pour réaliser un verrouillage d'un module de stockage disposé dans ledit rack avec une paroi se trouvant en partie avant dudit rack.

Un tel moyen de verrouillage avant vient rendre le verrouillage du module de stockage plus robuste contre les sollicitations mécaniques, avec un point de verrouillage à l'avant du rack, en plus du point de verrouillage à l'arrière du rack réalisé par le moyen de verrouillage arrière.

Avantageusement, le véhicule selon l'invention peut comprendre un dispositif de verrouillage avant sur chaque côté d'au moins un, en particulier de chaque, rack.

Suivant un mode de réalisation, au moins un dispositif de verrouillage avant peut comprendre une vis venant serrer une première paroi solidaire du module de stockage avec une deuxième paroi solidaire du rack :
- ladite deuxième paroi étant agencée à l'avant du rack,
- ladite première paroi étant agencée à une distance inférieure ou égale à la moitié d'une profondeur dudit module de stockage par rapport à l'avant dudit module de stockage, et en particulier à la moitié de la profondeur dudit module de stockage.

Dans ce cas, la deuxième paroi comporte un taraudage dans lequel la vis de serrage vient se visser pour réaliser le serrage de la première paroi avec la deuxième paroi.

Dans ce cas, la vis peut présenter une longueur supérieure ou égale à la moitié de la profondeur du module de stockage.

Ainsi, la tête de la vis se trouve à une distance inférieure ou égale à la moitié de la profondeur du module de stockage depuis l'avant du module de stockage, ce qui permet de faciliter l'accès à la tête de vis et donc une manipulation plus ergonomique de ladite vis.

Par ailleurs, la deuxième paroi peut comprendre un taraudage prévu dans une ouverture, présentant une section avant conique en regard de ladite vis et prévue pour centrer ladite vis dans ledit taraudage.

Ainsi, la vis peut être plus facilement positionnée par rapport au taraudage, ce qui permet de faciliter l'utilisation du dispositif de verrouillage arrière.

Avantageusement, au moins un module de stockage peut être muni d'une troisième paroi, solidaire dudit module de stockage, en partie avant dudit module de stockage, traversée par la vis.

Ainsi, une telle troisième paroi vient faciliter encore plus le positionnement et l'utilisation du dispositif de verrouillage avant.

Suivant un exemple de réalisation non limitatif, au moins un module de stockage peut comprendre une enveloppe renfermant une ou plusieurs batteries ou supercapacités et un habillage comportant deux tubes métalliques creux latéraux, venant se poser dans le rack, et serrés par le dispositif de verrouillage arrière.

En particulier, le crochet du moyen de verrouillage peut venir s'insérer dans le tube creux pour serrer ledit tube contre le rack.

De plus, la première et la troisième parois peuvent être prévues sur chaque tube métallique et peuvent faire saillie dudit tube métallique.

Le véhicule électrique selon l'invention peut être un bus électrique, un car électrique ou un tram-bus électrique.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

En particulier, le véhicule peut comprendre quatre modules de stockage d'énergie électrique disposés dans un berceau arrière comprenant quatre racks superposés.

Chaque module de stockage d'énergie électrique peut comprendre au moins une batterie, en particulier LMP® (pour « Lithium Métal Polymère »), ou au moins une supercapacité.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un véhicule électrique selon l'invention ;
- la FIGURE 2 est une représentation schématique de la partie arrière du véhicule de la FIGURE 1 ;
- la FIGURE 3 est une représentation schématique d'un exemple de réalisation non limitatif de racks prévus dans la partie arrière du véhicule de la FIGURE 1, pour recevoir des modules de stockage d'énergie ;
- la FIGURE 4 est une représentation schématique d'un exemple de réalisation non limitatif d'un module de stockage d'énergie électrique rechargeable ;
- les FIGURE 5a-5d sont des représentations schématiques d'un exemple de réalisation non limitatif d'un dispositif de verrouillage arrière selon l'invention ; et
- les FIGURE 6a-6d sont des représentations schématiques d'un exemple de réalisation non limitatif d'un dispositif de verrouillage avant pouvant être mis en oeuvre dans un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

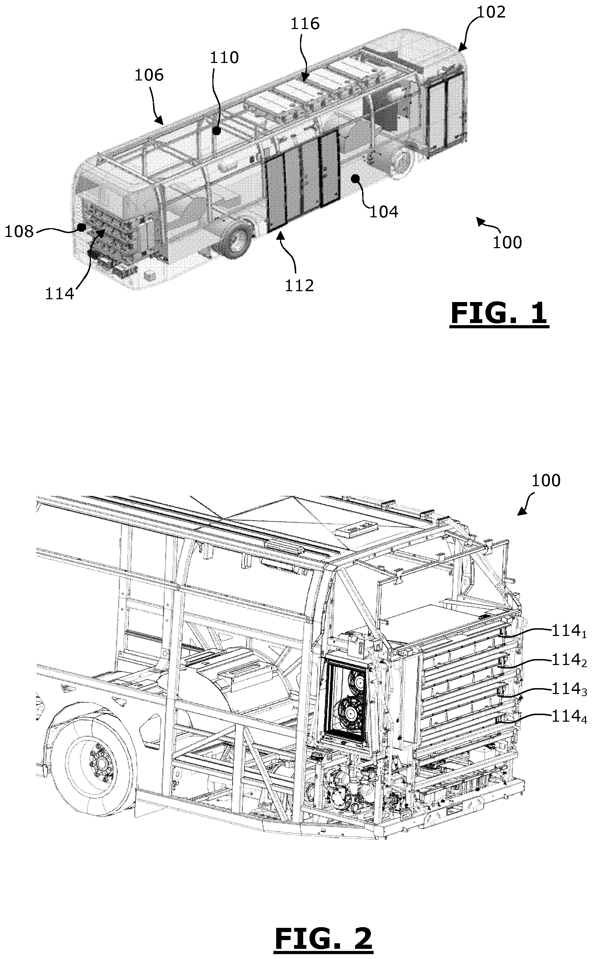

La FIGURE 1 est une représentation schématique, suivant une vue isométrique, d'un exemple de réalisation non limitatif d'un véhicule selon l'invention.

Le véhicule électrique 100 représenté sur la FIGURE 1 est un bus électrique comportant un habitacle délimité par une paroi avant 102, deux parois latérales longitudinales 104 et 106, une paroi arrière 108, une paroi supérieure 110 et une paroi inférieure 112.

Le bus électrique 100 comporte un ou plusieurs moteurs électriques (non représentés sur la FIGURE 1), des modules 114, dits arrière, de stockage d'énergie électrique, de préférence rechargeables, disposés du côté de la paroi arrière 108 du bus 100. Le bus 100 comprend en outre des modules 116, dits supérieurs, de stockage d'énergie électrique, de préférence rechargeables, disposés dans un logement aménagé dans la paroi supérieure 110 du bus 100.

Les modules de stockage d'énergie électrique 114 et 116 sont rechargés depuis une source électrique externe.

Le bus électrique 100 est mis en mouvement exclusivement par une chaine de traction alimentée par l'énergie électrique fournie par les modules de stockage d'énergie électriques 114 et 116.

La suite de la description concerne principalement les modules de stockage arrière 114.

La FIGURE 2 est une représentation partielle du véhicule de la FIGURE 1, en particulier selon une vue isométrique vue de l'arrière.

Tel que visible sur la FIGURE 2, le véhicule comprend quatre modules de stockage d'énergie électrique rechargeables 114₁-114₄ disposés dans quatre racks superposés. Les modules de stockage 114₁-114₄ sont disposés dans les, et enlevées des, racks par translation suivant une direction perpendiculaire à la paroi arrière du bus.

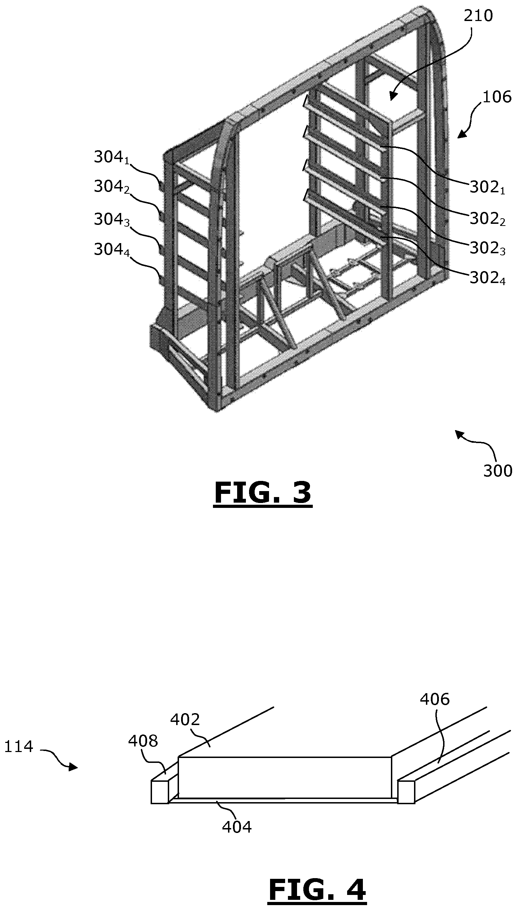

La FIGURE 3 est une représentation schématique simplifiée du logement prévu dans la partie arrière du bus de la FIGURE 1, pour accueillir les modules de stockage d'énergie électrique rechargeables 114.

Tel que représenté sur la FIGURE 3, quatre racks sont prévus pour accueillir les quatre modules de stockage 114₁-114₄ dans un module arrière 300 du côté de la paroi arrière du véhicule.

Chaque rack est formé par une paire de deux cornières horizontales 302-304, à savoir respectivement 302₁-304₁, 302₂-304₂, 302₃-304₃ et 302₄-304₄, disposées en regard l'une de l'autre.

Chaque cornière présente une section en forme de « L », la branche verticale du « L » permettant de fixer, par soudage ou par boulonnage, ladite cornière sur des montants verticaux du module arrière 300 et la branche horizontale du « L » servant de support à un module de stockage d'énergie électrique. Alternativement, chaque cornière peut présenter une section d'une autre forme, par exemple triangulaire ou parallélépipédique, etc.

La surface de chaque cornière prévue pour entrer en contact avec un module de stockage d'énergie, en particulier la face supérieure de la branche horizontale du « L », comporte un revêtement, de type téflon, présentant un plus petit coefficient de frottement, par rapport au reste de la cornière, permettant de faciliter la dépose ou l'enlèvement d'un module de stockage d'énergie dans le rack formé par ladite cornière.

Les cornières 302-304 sont réalisées en un matériau rigide et présentent des dimensions adaptées, pour supporter le poids des modules de stockage d'énergie électrique. Dans l'exemple représenté sur les FIGURES, les éléments d'ossature et les cornières formant les racks sont réalisés en acier traité par cataphorèse.

La FIGURE 4 est une représentation schématique d'un module de stockage d'énergie électrique.

Le module de stockage représenté sur la FIGURE 4 peut être l'un quelconque des modules de stockage d'énergie 114₁-114₄ des FIGURES 1-2.

Le module de stockage 114 comprend une enveloppe 402 rigide renfermant une ou plusieurs batteries ou supercapacités.

Le module de stockage 114 comprend en outre un habillage comprenant une plaque 404 sur laquelle est fixée l'enveloppe rigide 402, par exemple par vissage. L'habillage comprend en outre deux profilés, ou tubes, creux 406 et 408, de section parallélépipédique, prévus pour supporter le module de stockage 114, lorsqu'il est disposé dans un rack.

Alternativement à ce qui vient d'être décrit, le module de stockage peut ne pas comprendre de plaque 404 et les tubes creux 406 et 408 peuvent être fixés directement sur l'enveloppe rigide 402.

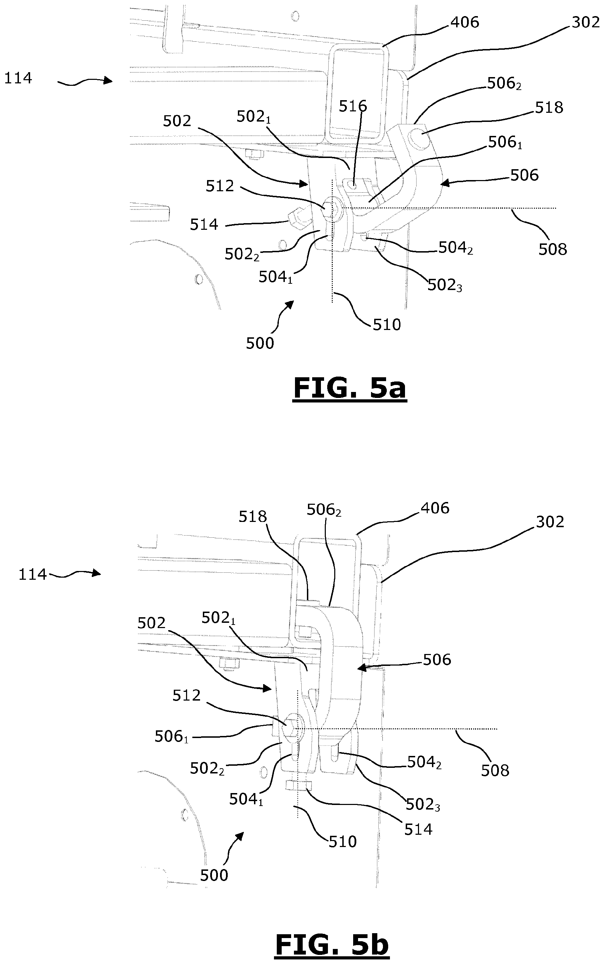

Les FIGURES 5a-5d sont différentes représentations schématiques d'un exemple de réalisation non limitatif d'un dispositif de verrouillage arrière selon l'invention.

Le dispositif de verrouillage 500 représenté sur les FIGURES 5a-5b comprend un corps 502 fixé solidaire et immobile à une cornière, par exemple la cornière 302, en particulier par soudage. Le corps 502 présente une forme générale en « U » renversée et comporte une branche centrale 502₁ et deux branches parallèles entre-elles 502₂ et 502₃. Le dispositif 500 est fixé à la cornière 302 par sa branche centrale 502₁. Chacune des branches parallèles 502₂ et 502₃ comporte une ouverture oblongue 504₁ et 504₂, en regard l'une de l'autre, pour recevoir un axe libre en rotation et en translation.

Le dispositif de verrouillage 500 comprend un crochet 506, sensiblement en forme de « C ». Le crochet 506 est relié au corps 502 au niveau de l'une de ses extrémités 506₁ et présente une extrémité libre 506₂ venant en appui sur une face intérieure du tube 406 d'un module de stockage 114 et serrer ledit tube contre la branche horizontale de la cornière 302 en forme de « L » et réaliser un verrouillage par serrage dudit module de stockage 114 dans le rack formé par la cornière 302.

Le crochet 506 est mobile en rotation autour d'un axe horizontal 508 et en translation le long d'un axe vertical 510, par rapport au corps 502. Pour ce faire, le crochet 506 comporte au niveau d'une de ses extrémités 506₁ un axe 512 traversant le crochet 506. L'axe 512 est agencé dans les ouvertures oblongues 504₁ et 504₂ prévues dans les branches parallèles 502₂ et 502₃ du corps 502, libre en rotation autour de l'axe 508 et libre en translation le long de l'axe 510.

Le crochet 506 comporte en outre une vis de serrage 514, aménagée dans un taraudage 516 et venant en butée contre la branche centrale 502₁ du corps 502, et appliquant une translation au crochet 506 dans un sens ou dans l'autre en fonction du sens de rotation appliqué à la vis de serrage 514.

Par ailleurs, le crochet 506 comporte au niveau de son extrémité libre 506₂ une butée 518 prévue pour venir se loger dans un évidement (non représenté) de section conique prévu dans la surface intérieure du tube 406 sur laquelle l'extrémité libre 506₂ du crochet 506 vient en appui.

La FIGURE 5a est une représentation schématique du dispositif de verrouillage 500, dans une position ouverte, selon une vue isométrique.

Pour verrouiller le module de stockage 114, le crochet est mis en rotation autour de l'axe 508 de sorte que l'extrémité libre 506₂ du crochet vient s'introduire dans le tube creux 406. La FIGURE 5b est une représentation schématique, selon une vue isométrique, du dispositif de verrouillage 500, dans une position semi-ouverte, obtenue après rotation autour de l'axe 508.

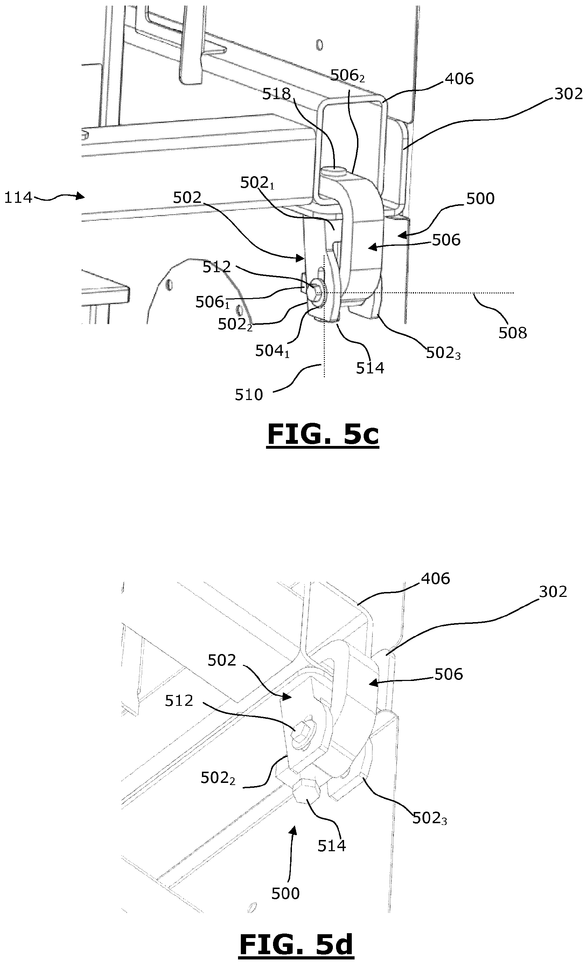

Ensuite, le crochet est mis en translation le long de l'axe de translation 510 par rotation de la vis de serrage 514, qui vient d'abord en butée contre la branche centrale 502₁ du corps 502, puis applique une translation au crochet 506 dans les ouvertures oblongues 504. L'extrémité libre 506₂ du crochet 506 vient alors en appui dans le tube 406 et plaque ledit tube 406 contre la cornière 302. La butée 518 s'insère dans l'évidement prévu dans le tube 406. La vis de serrage 514 peut alors être fortement serrée pour assurer le verrouillage. La FIGURE 5c est une représentation schématique du dispositif de verrouillage 500 dans une position fermée serrée. La FIGURE 5d est une représentation schématique du dispositif de verrouillage 500, dans la position fermée serrée, selon une vue isométrique vue de dessous.

Dans le véhicule 100, chaque rack comporte un dispositif de verrouillage arrière équipant chaque cornière 302 et 304, en partie arrière de chaque cornière de chaque rack. Autrement dit, chaque rack recevant un module de stockage comporte deux dispositifs de verrouillage arrière réalisant un verrouillage dudit module de stockage, en partie arrière du rack, c'est-à-dire au plus proche de la face arrière du bus, au niveau de chacun des côtés latéraux dudit module de stockage.

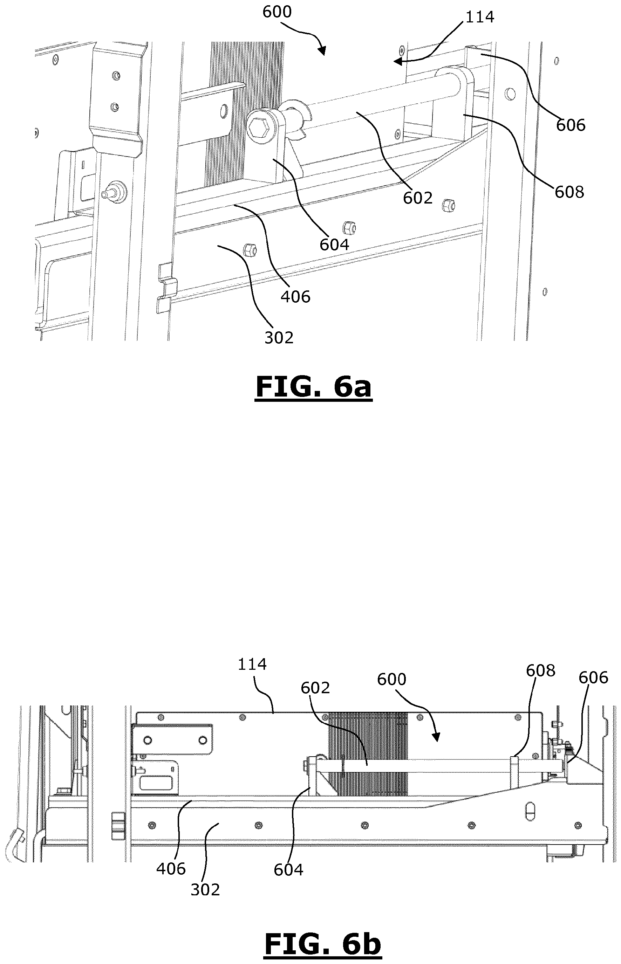

Les FIGURES 6a-6d sont différentes représentations schématiques d'un exemple de réalisation non limitatif d'un dispositif de verrouillage avant pouvant être utilisé pour réaliser un point de verrouillage avant de module de stockage.

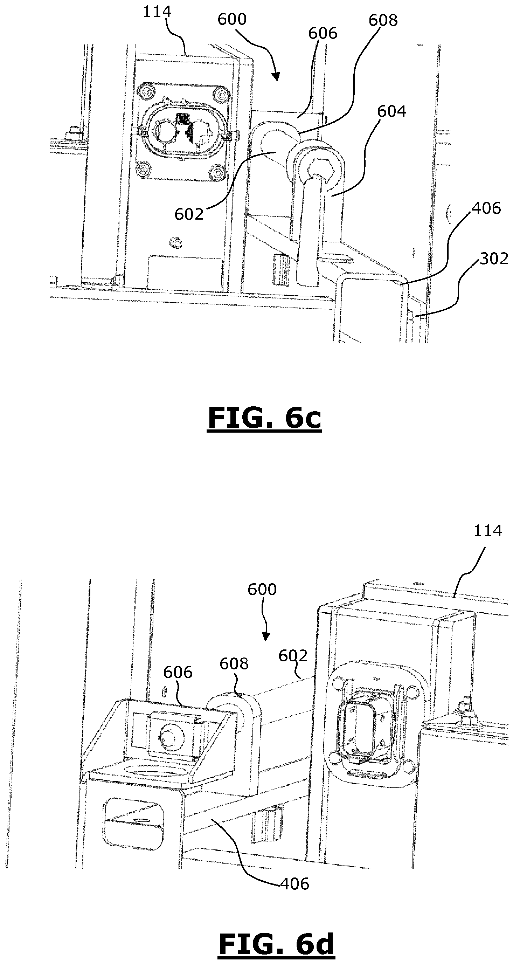

Le dispositif de verrouillage 600 est représenté sur la FIGURE 6a selon une vue isométrique de côté, sur la FIGURE 6b selon une vue de côté, sur la FIGURE 6c selon une vue isométrique de devant et sur la FIGURE 6d selon une vue isométrique de derrière.

Le dispositif de verrouillage arrière 600 représenté sur les FIGURES 6a-6d comprend une vis de serrage longue 602, insérée dans une ouverture prévue dans une paroi verticale 604 solidaire du tube 406, à une distance égale à la moitié de la profondeur du module de stockage 114, par rapport à l'avant dudit module de stockage 114.

La vis 602 vient se visser dans un taraudage (non représenté) prévu dans une paroi verticale 606 à l'avant du rack, solidaire de la cornière 302.

Une paroi verticale intermédiaire 608 est prévue sur le tube 406. Cette paroi intermédiaire 608 comporte une ouverture traversée par la vis 602, facilitant le positionnement de la vis 602 par rapport au taraudage prévu sur la paroi 606.

Le taraudage peut être formé dans une ouverture comportant une partie avant de section conique facilitant encore plus le positionnement de la vis 602.

Le dispositif de verrouillage avant 600 permet ainsi un accès facilité à la tête de la vis 602 depuis la partie arrière de chaque rack, ce qui permet une manipulation ergonomique dudit dispositif de verrouillage arrière 600.

Dans le véhicule 100, chaque rack comporte un dispositif de verrouillage avant 600, du côté de chaque cornière 302 et 304 de chaque rack. Autrement dit, chaque rack recevant un module de stockage 114 comporte deux dispositifs de verrouillage avant 600 réalisant un verrouillage dudit module de stockage 114, en partie avant dudit rack, c'est-à-dire au plus proche de la face avant du bus, sur chacun des côtés latéraux dudit module de stockage 114.

Tel que décrit, chaque module de stockage est verrouillé en position par une combinaison de dispositifs de verrouillage avant et de dispositifs de verrouillage arrière. La combinaison de ces dispositifs de verrouillage permet d'obtenir :
- un verrouillage robuste de chaque module de stockage d'énergie électrique avec des points de fixation avant et arrière, et
- un verrouillage et un déverrouillage plus simple, moins chronophage et plus ergonomique, de chaque module de stockage d'énergie électrique.

Bien entendu, l'invention n'est pas limitée aux exemples détaillés ci-dessus.

En particulier, le nombre de modules de stockage n'est pas limité à celui donné dans les exemples, et correspond au maximum de modules de stockage d'énergie dépendant notamment du poids du véhicule et de l'autonomie jugée suffisante pour le fonctionnement du véhicule.

De plus, l'invention n'est pas limitée aux bus et peut par exemple être appliquée aux cars, aux tram-bus et d'autres véhicules de transport en commun, en particulier terrestre, et encore plus particulièrement sur route.

## Revendications

1. Dispositif (500) de verrouillage d'un module (114) de stockage d'énergie électrique rechargeable dans un véhicule électrique (100), comprenant :
- une partie fixe (502), dite corps, et
- une partie (506), dite crochet, mobile en rotation autour d'un axe de rotation (508), lui-même libre en translation, par rapport audit corps (502) ;
de sorte que ledit crochet (506) est déplaçable entre une position ouverte et une position fermée, dans laquelle il vient serrer ledit module de stockage (114) contre une paroi (302) prévue dans ledit véhicule (100), par rotation puis par translation ;
**caractérisé en ce que** ledit axe de rotation (512) est disposé dans au moins une ouverture oblongue (504) prévue dans ledit corps (502), dans laquelle il est libre en translation.

2. Dispositif (500) selon la revendication précédente, **caractérisé en ce qu'**il comprend en outre une vis (514), dite de serrage, agencée dans un taraudage (516) prévu dans le crochet (506) et venant en butée contre le corps (502), la translation du crochet (506) étant réalisée par rotation de ladite vis de serrage (514).

3. Dispositif (500) selon l'une quelconque des revendications précédentes, **caractérisé en ce que** le crochet (506) comporte une butée (518), faisant saillie dudit crochet (506) et prévue pour venir se loger dans un évidement prévu à cet effet, lorsque ledit crochet (506) est en position fermée.

4. Dispositif (500) selon l'une quelconque des revendications précédentes, **caractérisé en ce que** la rotation du crochet (506) est assurée par un axe (512) traversant ledit crochet (506), au niveau d'une des extrémités dudit crochet (506), et disposé rotatif dans une ouverture aménagée dans le corps (502).

5. Dispositif (500) selon l'une quelconque des revendications précédentes, **caractérisé en ce que** le crochet (506) présente une forme générale en « C », dont l'une (506₂) des extrémités est libre et réalise le serrage du module de stockage (114) et l'autre (506₁) des extrémités est reliée au corps (502) et comporte :
- un axe (512) traversant ledit cochet (506), et
- un taraudage accueillant une vis de serrage (514) qui, lorsqu'elle est mise en rotation, vient en butée contre ledit corps (502) et applique une translation audit crochet (506).

6. Dispositif (500) selon l'une quelconque des revendications précédentes, **caractérisé en ce que** le corps (502) présente une forme générale en « U », dont chaque branche (502₂, 502₃) comporte une ouverture oblongue (504₁, 504₂), recevant un axe (512) libre en rotation et en translation par rapport audit corps (502).

7. Véhicule électrique (100) comprenant :
- au moins un module (114) de stockage d'énergie électrique rechargeable, disposé dans un emplacement, dit rack, aménagé dans une paroi latérale, et
- au moins un dispositif de verrouillage (500), dit arrière, selon l'une quelconques des revendications précédentes, en partie arrière dudit rack.

8. Véhicule (100) selon la revendication précédente, **caractérisé en ce qu'**il comprend, pour au moins un côté d'au moins un rack, au moins un dispositif de verrouillage (600), dit avant, pour réaliser un verrouillage d'un module de stockage (114) disposé dans ledit rack avec une paroi (606) se trouvant en partie avant dudit rack.

9. Véhicule (100) selon la revendication précédente, **caractérisé en ce qu'**au moins un dispositif de verrouillage avant (600) comprend une vis (602) venant serrer une première paroi (604) solidaire du module de stockage (114) avec une deuxième paroi (606) solidaire du rack :
- ladite deuxième paroi (606) étant agencée à l'avant du rack,
- ladite première paroi (604) étant agencée à une distance inférieure ou égale à la moitié d'une profondeur dudit module de stockage (114) par rapport à l'avant dudit module de stockage (114).

10. Véhicule (100) selon la revendication précédente, **caractérisé en ce que** la deuxième paroi (606) comprend un taraudage prévu dans une ouverture, présentant une section avant conique en regard de la vis (602) et prévue pour centrer ladite vis (602) dans ledit taraudage.

11. Véhicule (100) selon l'une quelconque des revendications 9 ou 10, **caractérisé en ce que** le module de stockage (114) est muni d'une troisième paroi (608), solidaire dudit module de stockage (114), en partie avant dudit module de stockage (114), traversée par la vis (602).

12. Véhicule (100) selon l'une quelconque des revendications 7 à 11, **caractérisé en ce qu'**au moins un module de stockage (114) comprend une enveloppe (402) renfermant une ou plusieurs batteries ou supercapacités et un habillage comportant deux tubes métalliques creux latéraux (406, 408), venant se poser dans le rack, et serrés par le dispositif de verrouillage arrière (500).

13. Véhicule (100) selon l'une quelconque des revendications 7 à 12, **caractérisé en ce qu'**au moins un rack est formé par deux cornières latérales (302, 304), prévues pour supporter un module de stockage (114), au moins un dispositif de verrouillage arrière (500) étant fixé solidaire d'au moins une cornière (302, 304).

14. Véhicule (100) selon l'une quelconque des revendications 7 à 13, **caractérisé en ce qu'**il s'agit d'un bus électrique, d'un car électrique ou d'un tram-bus électrique.

## Patentansprüche

1. Vorrichtung (500) zum Verriegeln eines wiederaufladbaren elektrischen Energiespeichermoduls (114) in einem Elektrofahrzeug (100), umfassend:
- ein festes Teil, den sogenannten Körper (502), und
- ein gegenüber dem Körper (502) drehbar um eine Drehachse (508) angeordnetes Teil, den sogenannten Haken (506), wobei die Drehachse selbst frei verschiebbar ist;
sodass der Haken (506) zwischen einer offenen Stellung und einer geschlossenen Stellung bewegbar ist, in welcher er das Speichermodul (114) gegen eine im Fahrzeug (100) vorgesehene Wandung (302) durch Drehbewegung, dann durch Translation andrückt;
**dadurch gekennzeichnet, dass** die Drehachse (512) in mindestens einer im Körper (502) vorgesehenen, sich längserstreckenden Öffnung (504) gelagert ist, in welcher sie frei verschiebbar ist.

2. Vorrichtung (500) nach dem vorhergehenden Anspruch, **dadurch gekennzeichnet, dass** sie weiterhin eine sogenannte Spannschraube (514) umfasst, die in einer im Haken (506) vorgesehenen Gewindebohrung (516) angeordnet und gegen den Körper (502) in Anschlag gebracht ist, wobei die Translation des Hakens (506) durch Drehung der Spannschraube (514) erfolgt.

3. Vorrichtung (500) nach einem der vorhergehenden Ansprüche, **dadurch gekennzeichnet, dass** der Haken (506) einen Anschlag (518) umfasst, welcher über den Haken (506) vorsteht und zur Aufnahme in einer dafür vorgesehenen Ausnehmung vorgesehen ist, wenn sich der Haken (506) in geschlossener Stellung befindet.

4. Vorrichtung (500) nach einem der vorhergehenden Ansprüche, **dadurch gekennzeichnet, dass** die Drehung des Hakens (506) durch eine Welle (512) ausgeführt wird, die durch den Haken (506) hindurch an einem der Enden des Hakens (506) verläuft und drehbeweglich in einer im Körper (502) angeordneten Öffnung gelagert ist.

5. Vorrichtung (500) nach einem der vorhergehenden Ansprüche, **dadurch gekennzeichnet, dass** der Haken (506) eine allgemeine C-Form aufweist, von dem das eine (506₂) der Enden frei ist und das Spannen des Speichermoduls (114) ausführt, und das andere (506₁) der Enden mit dem Körper (502) verbunden ist und enthält:
- eine Welle (512), die durch den Haken (506) hindurch verläuft, und
- eine Gewindebohrung zur Aufnahme einer Spannschraube (514), welche bei einer Drehbewegung gegen den Körper (502) zum Anschlag gebracht wird und den Haken (506) mit einer Translation beaufschlagt.

6. Vorrichtung (500) nach einem der vorhergehenden Ansprüche, **dadurch gekennzeichnet, dass** der Körper (502) eine allgemeine U-Form aufweist, dessen Zweige (502₂, 502₃) jeweils eine sich längserstreckende Öffnung (504₁, 504₂) enthalten, welche eine gegenüber dem Körper (502) frei drehbewegliche und verschiebbare Welle (512) aufnimmt.

7. Elektrofahrzeug (100), umfassend:
- mindestens ein wiederaufladbares, elektrisches Energiespeichermodul (114), das in einer in einer Seitenwand gebildeten Aufnahme, dem sogenannten Gestell, gelagert ist, und
- mindestens eine sogenannte rückwärtige Verriegelungsvorrichtung (500) nach einem der vorhergehenden Ansprüche am hinteren Teil des Gestells.

8. Fahrzeug (100) nach dem vorhergehenden Anspruch, **dadurch gekennzeichnet, dass** es für mindestens eine Seite mindestens eines Gestells mindestens eine sogenannte vordere Verriegelungsvorrichtung (600) zur Ausführung einer Verriegelung eines im Gestell gelagerten Speichermoduls (114) umfasst, wobei eine Wand (606) des Speichermoduls sich im vorderen Teil des Gestells befindet.

9. Fahrzeug (100) nach dem vorhergehenden Anspruch, **dadurch gekennzeichnet, dass** wenigstens eine vordere Verriegelungsvorrichtung (600) eine Schraube (602) umfasst, welche eine erste, mit dem Speichermodul (114) fest verbundene Wand (604) mit einer zweiten, mit dem Gestell fest verbundenen Wand (606) spannt:
- wobei die zweite Wand (606) im Vorderteil des Gestells angeordnet ist,
- wobei die erste Wand (604) in einem Abstand kleiner oder gleich der Hälfte einer Tiefe des Speichermoduls (114) zum Vorderteil des Speichermoduls (114) angeordnet ist.

10. Fahrzeug (100) nach dem vorhergehenden Anspruch, **dadurch gekennzeichnet, dass** die zweite Wand (606) eine in einer Öffnung vorgesehenen Gewindebohrung aufweist, wobei die Öffnung einen vorderen, kegelförmigen, der Schraube (602) gegenüberliegenden Abschnitt aufweist, welcher zur Zentrierung der Schraube (602) in der Gewindebohrung vorgesehen ist.

11. Fahrzeug (100) nach einem der Ansprüche 9 oder 10, **dadurch gekennzeichnet, dass** das Speichermodul (114) mit einer dritten Wand (608) ausgebildet ist, welche mit dem Speichermodul (114) fest gekoppelt, im Vorderteil des Speichermoduls (114) gelagert und von der Schraube (602) durchbohrt ist.

12. Fahrzeug (100) nach einem der Ansprüche 7 - 11, **dadurch gekennzeichnet, dass** mindestens ein Speichermodul (114) eine Hülle (402), welche eine oder mehrere Batterien oder Superkondensatoren umschließt, sowie eine Verkleidung mit zwei hohlen, seitlichen Metallrohren (406, 408) umfasst, welche in dem Gestell aufgesetzt werden und durch die rückwärtige Verriegelungsvorrichtung (500) gespannt werden.

13. Fahrzeug (100) nach einem der Ansprüche 7 - 12, **dadurch gekennzeichnet, dass** mindestens ein Gestell durch zwei seitliche Winkelprofile (302, 304) ausgebildet ist, welche zum Tragen eines Speichermoduls (114) vorgesehen sind, wobei mindestens eine rückwärtige Verriegelungsvorrichtung (500) mit mindestens einem Winkelprofil (302, 304) fest verankert ist.

14. Fahrzeug (100) nach einem der Ansprüche 7 - 13, **dadurch gekennzeichnet, dass** es sich um einen Elektrobus, einen Elektroreisebus oder einen Elektrostraßenbahn-Bus handelt.

## Claims

1. A device (500) for locking a rechargeable electrical energy storage module (114) in an electric vehicle (100), comprising:
- a fixed part (502), said body, and
- a part (506), said hook, mobile in rotation about a rotation axis (508), itself free in translation with respect to said body (512);
so that said hook (506) is movable between an open position and a closed position, in which it clamps said storage module (114) against a wall (302) provided in said vehicle (100), by rotation then by translation; **characterized in that** said rotation axis (512) is arranged in at least one oblong opening (504) provided in said body (502), in which it is free in translation.

2. The device (500) according to the preceding claim, **characterized in that** it further comprises a screw (514), called clamping screw, arranged in a female screw thread (516) provided in the hook (506) and coming into abutment against the body (502), the translation of the hook (506) being carried out by rotation of said clamping screw (514).

3. The device (500) according to any one of the preceding claims, **characterized in that** the hook (506) comprises a stop (518) protruding from said hook (506) and provided in order to fit within a recess provided for this purpose, when said hook (506) is in the closed position.

4. The device (500) according to any one of the preceding claims, **characterized in that** the rotation of the hook (506) is provided by a shaft (512) passing through said hook (506) at the level of one of the ends of said hook (506) and arranged rotatably in an opening arranged in the body (502).

5. The device (500) according to any one of the preceding claims, **characterized in that** the hook (506) has a general "C" shape, one (506₂) of the ends of which is free and carries out the clamping of the storage module (114) and the other end (506₁) is connected to the body (502) and comprises:
- a shaft (512) passing through said hook (506), and
- a female screw thread receiving a clamping screw (514) which, when rotated, comes into abutment against said body (502) and applies a translation to said hook (506).

6. The device (500) according to any one of the preceding claims, **characterized in that** the body (502) has a general "U" shape, each leg (502₂, 502₃) of which comprises an oblong opening (504₁, 504₂), receiving a shaft (512) that is free in rotation and in translation with respect to said body (502).

7. An electric vehicle (100) comprising:
- at least one rechargeable electrical energy storage module (114), arranged in a location, called rack, arranged in a side wall, and
- at least one locking device (500), called rear locking device, according to any one of the preceding claims, in the rear part of said rack.

8. The vehicle (100) according to the preceding claim, **characterized in that** it comprises for at least one side of at least one rack, at least one locking device (600), called front locking device, for carrying out a locking of a storage module (114) placed within said rack with a wall (606) located in the front part of said rack.

9. The vehicle (100) according to the preceding claim, **characterized in that** at least one front locking device (600) comprises a screw (602) clamping a first wall (604) integral with the storage module (114) to a second wall (606) integral with the rack:
- said second wall (606) being arranged at the front of the rack,
- said first wall (604) being arranged at a distance less than or equal to half of a depth of said storage module (114) with respect to the front of said storage module (114).

10. The vehicle (100) according to the preceding claim, **characterized in that** the second wall (606) comprises a female screw thread provided in an opening, having a conical front section facing the screw (602) and provided in order to center said screw (602) in said female screw thread.

11. The vehicle (100) according to any one of claims 9 or 10, **characterized in that** the storage module (114) is equipped with a third wall (608), integral with said storage module (114), in the front part of said storage module (114), passed through by the screw (602).

12. The vehicle (100) according to any one of claims 7 to 11, **characterized in that** at least one storage module (114) comprises a housing (402) containing one or more batteries or supercapacitors and a trim comprising two hollow metallic side tubes (406, 408), for placing within the rack, and clamped by the rear locking device (500).

13. The vehicle (100) according to any one of claims 7 to 12, **characterized in that** at least one rack is formed of two side angle irons (302, 304), provided in order to support a storage module (114), at least one rear locking device (500) being secured to at least one angle iron (302, 304).

14. The vehicle (100) according to any one of claims 7 to 13, **characterized in that** it is an electric bus, an electric coach or an electric tyred tram.
